# EUROPEAN PATENT APPLICATION

(11) **EP 4 151 952 A1**
(43) Date of publication of application: **22.03.2023**
(21) Application number: 21804109.3
(22) Date of filing: 16.02.2021
(51) Int. Cl.: G01C 21/34, B60W 30/10, G01C 21/26, G05D 1/02, G08G 1/09, G08G 1/095

(54) **TRAVEL ROUTE GENERATION DEVICE, TRAVEL ROUTE GENERATION METHOD, AND AUTOMATIC DRIVING SYSTEM**

(30) Priority: 15.05.2020 JP 2020086325
(71) Applicant: Yamaha Hatsudoki Kabushiki Kaisha, Iwata-shi, Shizuoka 438-8501 (JP)
(72) Inventor: KON, Kento, Iwata-shi, Shizuoka 438-8501 (JP); WATANABE, Hitoshi, Iwata-shi, Shizuoka 438-8501 (JP)
(74) Representative: Grünecker Patent- und Rechtsanwälte PartG mbB
(86) International application number: PCT/JP2021/005702
(87) International publication number: WO 2021/229881

(57) **Abstract**

A route generating device that can relatively easily generate a planned route to be traveled by an autonomous vehicle is provided. A storage device (72) of a vehicle management device (70) stores route basic information including waypoints (W) arranged along a predetermined drivable route in a vehicle operation area (B). A computing device (71) generates planned route information indicating a route to be traveled by a vehicle (10) in response to a movement request to the vehicle (10). The computing device (71) extracts some of the waypoints included in the route basic information as the planned route information, where some of the waypoints are arranged from a traveling start position to a traveling end position according to the movement request.

## Description

### Technical Field

The present disclosure relates to a travel route generating device, a travel route generating method, and an autonomous driving system.

### Background Art

Patent Literature 1 proposes a system including a vehicle that travels within a predetermined area and a control device that receives a vehicle dispatch request from a user and moves the vehicle toward a pick-up location desired by the user. The drivable routes are determined in the area in advance, and upon receiving the dispatch command from the control device, the vehicle moves according to the dispatch command to the pick-up location desired by the user. The dispatch command may specify not only the pick-up location but also a route that the user desires to travel from the pick-up location to the drop-off location (destination).

### Citation List

### Patent Literature

Patent Literature 1: WO2019/124534A

### Summary of Invention

### Technical Problem

Upon receiving a planned route, which is a route to be traveled, an autonomous vehicle controls a driving device (e.g., an electric motor) and a steering mechanism so as to travel along the planned route while monitoring the current location of the vehicle with an external sensor, such as LiDAR (light detection and ranging). It is desirable that the planned route required for such traveling is generated by simple processing.

### Solution to Problem

(1) A travel route generating device proposed in this disclosure includes a storage device in which route basic information is stored in advance, the route basic information including waypoints arranged along a drivable route previously defined in a predetermined area, and a computing device for generating planned route information indicating a route to be traveled by a vehicle in response to a movement request to the vehicle. The computing device extracts some of the waypoints included in the route basic information as the planned route information, where the some of the waypoints being arranged from a traveling start position to a traveling end position according to the movement request. This device enables to relatively easily generate the planned route.
(2) The travel route generating device of (1) may further include a communication device for transmitting the planned route information to the vehicle. This eliminates the need to perform route search in the vehicle, thereby reducing the computational load on the vehicle.
(3) In the travel route generating device of (1), the route basic information may include additional guidance in association with at least one of the waypoints included in the route basic information, where the additional guidance indicates a predetermined operation to be performed by the vehicle or a predetermined operation that the vehicle is allowed to perform. In this manner, the additional guidance included in the planned route can help control of the autonomous vehicle.
(4) In the travel route generating device of (3), the additional guidance may be information for guiding the vehicle to at least one of operations including a temporary stop of the vehicle, overtaking a vehicle travelling ahead, processing related to an arbitration with another vehicle at an intersection, and flashing of a flasher. In this manner, the additional guidance included in the planned route can help a temporary stop of the vehicle, overtaking a vehicle travelling ahead, processing related to an arbitration with another vehicle at an intersection, or flashing of a flasher.
(5) In the travel route generating device of (1), each of the waypoints included in the route basic information is associated with a coordinate value in a coordinate system defined in the predetermined area and a coordinate value of a world geodetic system. This can specify the pick-up location and the drop-off location desired by the user by the coordinate values of the world geodetic system.
(6) In the travel route generating device of (1), the route basic information may include first basic information and second basic information, where the first basic information defines a plurality of links indicating the drivable route and a plurality of nodes, which are ends of the plurality of links, and the second basic information associates the plurality of links with the waypoints arranged along the drivable route. The computing device may search for a link from the traveling start position to the traveling end position using the first basic information and refer to the second basic information so as to acquire a waypoint corresponding to the link obtained by the search as the planned route information. This serves to reduce the computational load required for the route search.
(7) In the travel route generating device of (1), the route basic information may include first basic information and second basic information, where the first basic information indicates the drivable route previously defined in the predetermined area, and the second basic information associates a route specified by the first basic information with a waypoint. The computing device may search for a route from the traveling start position to the traveling end position by using the first basic information and refer to the second basic information so as to acquire a waypoint corresponding to the route obtained by the search as the planned route information. By simplifying the first basic information, the computational load required for the route search can be reduced.
(8) In the travel route generating device of (1), the drivable route may have an annular shape. In this manner, the vehicle can reach the traveling end position by being moved in the traveling direction regardless of the positional relationship between the traveling start position and the traveling end position.
(9) In the travel route generating device of (1), the route defined by the planned route information may continue from the traveling start position according to the movement request to the traveling end position according to the movement request. The route defined by the planned route information may include a first partial route and a second partial route between the traveling start position and the traveling end position. The computing device may divide the waypoints extracted as the route defined by the planned route information into the waypoints corresponding to the first partial route and the waypoints corresponding to the second partial route.
(10) In the travel route generating device of (9), the route defined by the planned route information may include an intersection, the first partial route may include one of two routes intersecting with each other at the intersection, and the second partial route may include the other of the two routes intersecting with each other at the intersection. This helps the autonomous vehicle to properly drive through the intersection.
(11) An autonomous driving system includes the travel route generating device and the vehicle of (1), where the vehicle may include a driving mechanism, a steering mechanism, and a control device that controls the driving mechanism and the steering mechanism so that the vehicle travels along the route defined by the planned route information. The travel route generating device may include a communication device that transmits the planned route information to the vehicle. This eliminates the need to perform route search in the vehicle, thereby reducing the computational load on the vehicle.
(12) In the autonomous driving system of (11), it may be determined whether the vehicle is on the drivable route. The travel route generating device may not need to transmit the planned route information to the vehicle in a case where the vehicle is not on the drivable route.
(13) In the autonomous driving system of (11), the movement request to the vehicle may be a request for at least one of a movement from a current location of the vehicle to a pick-up location desired by a user, a movement from the pick-up location desired by the user to a drop-off location desired by the user, or a movement from the current location of the vehicle to a forwarding location.
(14) In the autonomous driving system of (11), the vehicle may include an external sensor and a storage device, where the external sensor outputs surrounding information indicating a position of an object around the vehicle, and the storage device stores map information indicating a position of an object in the predetermined area. The control device of the vehicle may include a location estimating unit that matches the surrounding information with the map information so as to estimate a location of the vehicle. The map information may be transmitted to the vehicle at a timing different from the planned route information. This allows map information having a large amount of data to be safely transmitted to the vehicle.
(15) In the autonomous driving system of (11), the vehicle may include an external sensor and a storage device, where the external sensor outputs surrounding information indicating a position of an object around the vehicle, and the storage device stores map information indicating a position of an object in the predetermined area. The control device of the vehicle may include a location estimating unit that matches the surrounding information with the map information so as to estimate a location of the vehicle. The map information may be transmitted to the vehicle using communication means different from communication means for receiving the planned route information. This allows map information having a large amount of data to be safely transmitted to the vehicle.
(16) A travel route generating method proposed in this disclosure is a method for generating a planned route indicating a route to be traveled by a vehicle in a predetermined area. The method includes the steps of acquiring a traveling start position and a traveling end position according to a movement request to the vehicle and referring to route basic information that includes waypoints arranged along a predetermined drivable route in the predetermined area and is stored in a storage device so as to extract some of the waypoints that are included in the route basic information as the planned route information, where the some of the waypoints are arranged from the traveling start position to the traveling end position. This method enables to relatively easily generate the planned route.

### Brief Description of the Drawings

FIG. 1 is a block diagram showing a configuration of an autonomous driving system proposed in the present disclosure;
FIG. 2 is a block diagram showing a configuration of an autonomous vehicle;
FIG. 3 is a sequence diagram showing an example of processing executed by the autonomous vehicle, a vehicle management device, and a mobile terminal;
FIG. 4 is a block diagram showing functions of the vehicle management device;
FIG. 5A is a diagram for explaining an example of route basic information;
FIG. 5B is a diagram showing an example of waypoints constituting the route basic information;
FIG. 6 is a diagram showing planned route information extracted from the route basic information;
FIG 7 is a flow chart showing an example of processing executed by a transportation managing unit, a forwarding managing unit, and a planned route generating unit of the management device;
FIG. 8 is a flow chart showing an example of processing executed by the planned route generating unit;
FIG 9 is a diagram for explaining the route basic information;
FIG. 10 is a diagram for explaining additional guidance included in the route basic information;
FIG. 11 is a diagram for explaining additional guidance included in the route basic information;
FIG. 12 is a diagram for explaining additional guidance included in the route basic information;
FIG. 13 is a diagram for explaining additional guidance included in the route basic information;
FIG. 14 is a diagram for explaining additional guidance included in the route basic information;
FIG. 15A is a diagram showing a modification of the route basic information and explaining first basic information including the route basic information according to the modification;
FIG. 15B is a diagram showing a modification of the route basic information and explaining second basic information including the route basic information according to the modification;
FIG. 16 is a diagram for explaining an example of dividing the planned route from a traveling start position to a traveling end position into a first partial route and a second partial route;
FIG. 17 is a block diagram showing functions of a control device of the autonomous vehicle;
FIG. 18 is a flow chart showing an example of processing executed by the control device of the autonomous vehicle; and
FIG. 19 is a diagram for explaining processing for generating the route basic information.

### Description of Embodiments

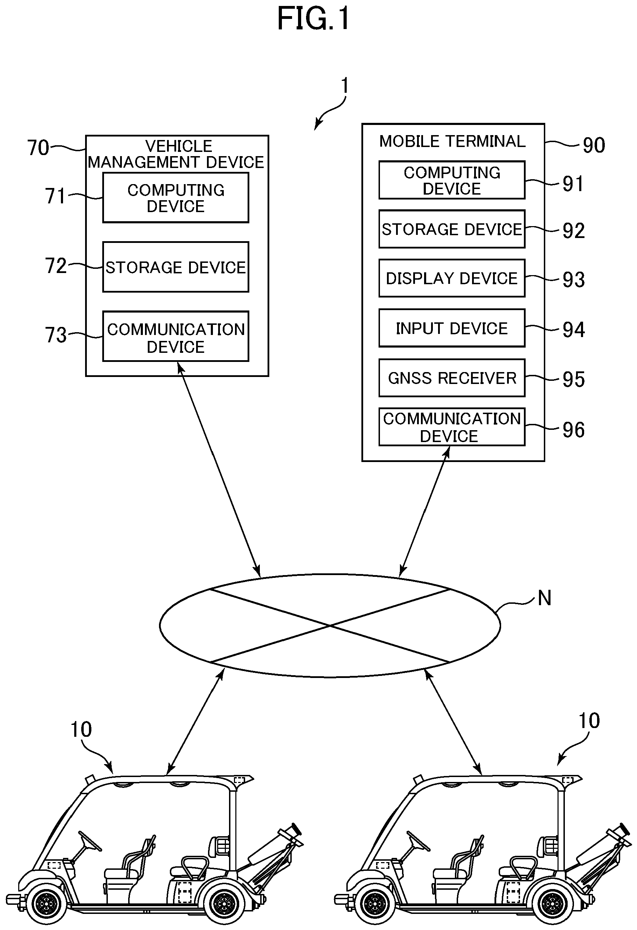

Embodiment of the present invention will be described. FIG. 1 is a block diagram showing an autonomous driving system 1, which is an example of an embodiment of the present invention.

As shown in FIG. 1, the autonomous driving system 1 includes a vehicle management device 70 and a plurality of autonomous vehicles 10. The vehicle management device 70 is connected to the autonomous vehicles 10 via an information communication network N. The vehicle management device 70 is also connected to a mobile terminal 90, which is used for requesting the use of the autonomous vehicle 10, via the information communication network N. The information communication network N includes the Internet, a mobile telephone network, WAN (Wide Area Network), LAN (Local Area Network), and a dedicated line, for example. In the following, the vehicle management device 70 is simply referred to as a management device 70, and the autonomous vehicle 10 is simply referred to as a vehicle 10.

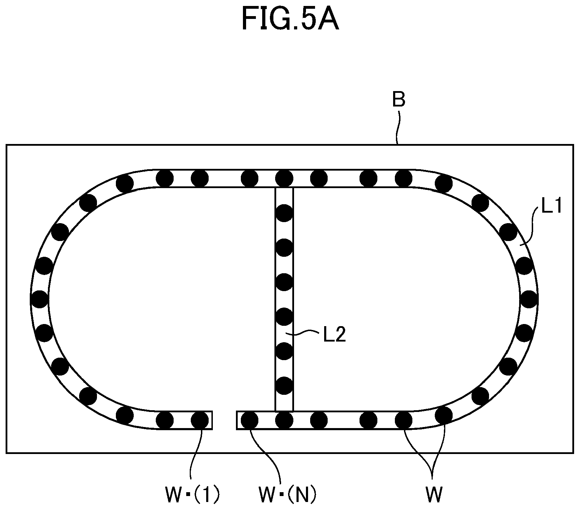

The autonomous driving system 1 is a system used in a predetermined area B (see FIG. 5A). The predetermined area B is a limited range such as an amusement park, a golf course, an event hall, and a tourist spot. The predetermined area B may be an area where general vehicles are restricted. In still another example, the predetermined area B may be a public road on which a travel route is set in advance. In this case, general vehicles may be allowed to travel in the travel route. The vehicle 10 travels along a predetermined drivable route within the area B under the control of the management device 70. For example, the management device 70 transmits, to the vehicle 10, a route to a pick-up location desired by the user and a route to a drop-off location (destination) desired by the user. The vehicle 10 travels along the route received from the management device 70. In the following, the "predetermined area" is referred to as a "vehicle operation area."

### [Outline of Autonomous Vehicle]

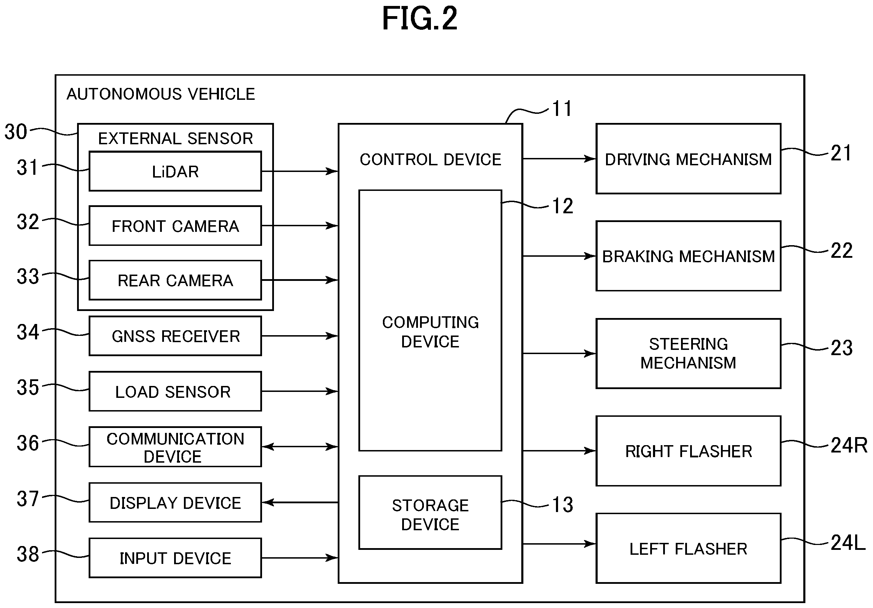

FIG. 2 is a block diagram showing a configuration of the autonomous vehicle 10. The vehicle 10 has a control device 11 including a computing device 12 and a storage device 13. The computing device 12 includes a CPU (Central Processing Unit), a GPU (Graphics Processing Unit), and an FPGA (Field Programmable Gate Array), for example. The computing device 12 executes a program stored in the storage device 13 and controls a driving mechanism 21 and a steering mechanism 23 that are described later. The storage device 13 includes, for example, a RAM (Random Access Memory) and a ROM (Read Only Memory). The control device 11 may include a plurality of devices (each including a computing device and a storage device) connected to each other via networks (e.g., controller area network (CAN)) mounted on the vehicle 10. In addition to the program, the storage device 13 stores data for the autonomous vehicle 10 to estimate its location (e.g., point cloud data), for example. When the vehicle 10 is traveling, route information received from the management device 70 is stored in the storage device 13.

As shown in FIG. 2, the vehicle 10 includes a driving mechanism 21, a braking mechanism 22, a steering mechanism 23, and left and right flashers 24R and 24L. The driving mechanism 21 includes an electric motor as a driving source of wheels, for example. In this case, the vehicle 10 includes a battery that stores power to be supplied to the electric motor. The driving source may be an engine. The driving mechanism 21 may include a transmission or a reduction gear on a power transmission path from the driving source to the wheels. The braking mechanism 22 applies a braking force to the wheels and includes a brake device and a control valve connected to the brake device via hydraulics. The steering mechanism 23 steers the front wheels, for example, and includes a steering shaft, a tie rod connecting the steering shaft to the wheels, and an actuator for rotating the steering shaft. The flasher 24R is a direction indicator for right turn and the flasher 24L is a direction indicator for left turn. The vehicle 10 is a vehicle in which a plurality of users can be seated, for example, but may be a vehicle for one person.

As shown in FIG. 2, the vehicle 10 has an external sensor group 30 for outputting surrounding information indicating positions of objects in the surrounding of the vehicle 10. The external sensor group 30 includes, for example, a LiDAR (light detection and ranging) 31 and a front camera 32. The external sensor group 30 may include a rear camera 33. The external sensor group 30 may include an ultrasonic sonar and a millimeter wave radar, for example. The vehicle 10 also includes a GNSS receiver 34. The GNSS receiver 34 receives radio waves from GNSS satellites (e.g., GPS satellites) and measures the position of the vehicle 10 based on the received radio waves. The vehicle 10 may have a load sensor 35 for detecting loads acting on the seat. The vehicle 10 can detect whether the user is seated based on the output of the load sensor 35. The vehicle 10 may have a camera that captures the interior of the vehicle 10 instead of the load sensor 35. The vehicle 10 may determine whether the user is seated in the vehicle 10 based on an image captured by the camera. The communication device 36 is a wireless communication module for communicating with the vehicle management device 70 via the information communication network N. The vehicle 10 may include a display device 37 and an input device 38. The display device 37 is a liquid crystal display or an organic EL display, for example. The input device 38 is a touch sensor provided on the display device 37, for example. The vehicle 10 may have buttons and switches as the input device 38.

### [Outline of Vehicle Management Device]

As shown in FIG. 1, the vehicle management device 70 includes a computing device 71, a storage device 72, and a communication device 73. The computing device 71 includes a CPU (Central Processing Unit), a GPU (Graphics Processing Unit), and an FPGA (Field Programmable Gate Array), for example. The computing device 71 executes a program stored in the storage device 72, and, in response to a dispatch request from the mobile terminal 90 of the user, for example, searches and generates a route to a pick-up location desired by the user and a route to a drop-off location desired by the user. The storage device 72 includes an HDD (hard disk drive), a RAM, and a ROM, for example. The storage device 72 stores information to be the basis of a route to be traveled by the vehicle 10 (route basic information to be described later). The communication device 73 is a communication module for communicating with the mobile terminal 90 of the user and the autonomous vehicle 10 via the information communication network N. The management device 70 may further include an input device (keyboard) for an administrator to input commands to the management device 70 and a display device for outputting a result of processing executed by the computing device 71, for example.

### [Mobile Terminal]

As shown in FIG. 1, the mobile terminal 90 includes a computing device 91, a storage device 92, a display device 93, an input device 94, a GNSS receiver 95, and a communication device 96. The computing device 91 includes a CPU and executes a program stored in the storage device 92, thereby executing the processing required by the user, for example. The storage device 92 includes a RAM and a ROM, for example. For example, the display device 93 is a liquid crystal display or an organic EL display, and the input device 94 is a touch sensor, a keyboard, and a button to be provided to the display device 93. The communication device 96 is a wireless communication module for communicating with the vehicle management device 70 via the information communication network N. The communication device 96 may communicate by wireless or wired. The mobile terminal 90 is a smart phone, for example, but may not be necessarily limited thereto.

### [Procedure of Dispatching and Transporting]

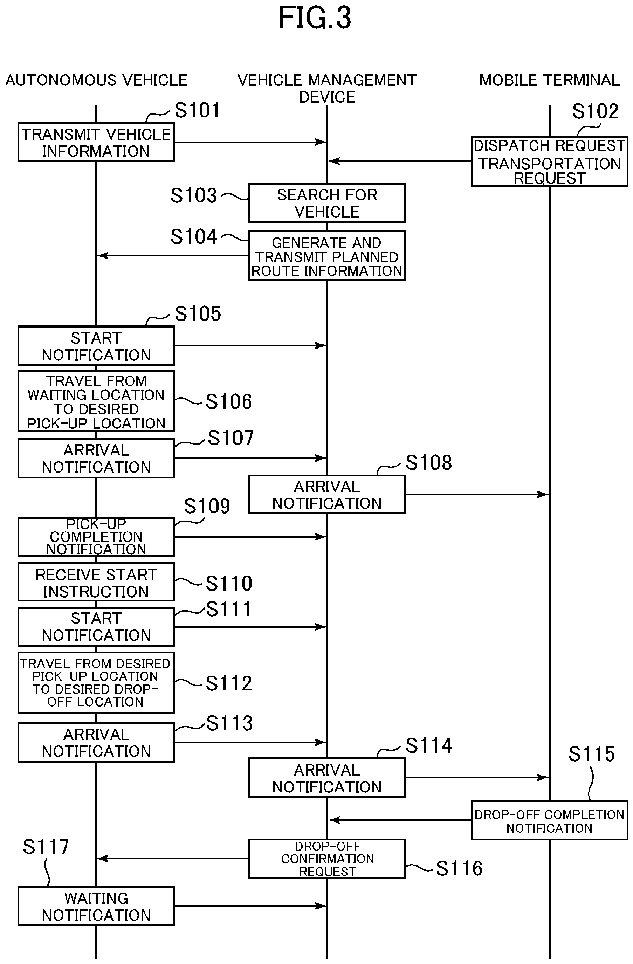

FIG. 3 is a sequence diagram showing an example of processing executed by the autonomous vehicle 10, the vehicle management device 70, and the mobile terminal 90 when the user wishes to move within the vehicle operation area B.

The vehicle 10 transmits information on the current location and the status of the vehicle 10 to the vehicle management device 70 (S101). The information on the state of the vehicle 10 includes whether the vehicle 10 is transporting a user (or waiting), for example. The information on the state of the vehicle 10 may include the remaining amount of the battery mounted on the vehicle 10 and whether there are any anomalies, for example. The information on the current location and the state of the vehicle 10 may be transmitted to management device 70 at regular time intervals while the control device 11 of the vehicle 10 is activated.

The management device 70 receives a dispatch and transportation request from the mobile terminal 90 of the user (S102).

The "dispatch" is to select one of the vehicles 10 in the autonomous driving system 1 and to move the selected vehicle 10 to the pick-up location desired by the user. In the following, the location where the user wishes to get in the vehicle is referred to as a "desired pick-up location." An example of the desired pick-up location is the current location of the user. Another example of the desired pick-up location may be a location designated through the mobile terminal 90, for example. The "transportation" means that the vehicle 10 in which the user gets at the pick-up location moves to a location where the use wishes to get off (destination). In the following, such a location to get off the vehicle is referred to as a "desired drop-off location." The dispatch and transportation request sent by the mobile terminal 90 to the management device 70 includes information indicating the desired pick-up location. The dispatch and transportation request may include information on the number of persons wishing to ride, a desired drop-off location (destination), and a desired time to ride, for example.

Upon receiving the dispatch and transportation request, the management device 70 searches for a vehicle to be directed to the desired pick-up location among from the vehicles 10 that the autonomous driving system 1 has (S103). For example, the management device 70 selects a vehicle 10 closest to the desired pick-up location. The management device 70 may select a vehicle to be directed to the desired pick-up location based on the number of persons wishing to ride and the number of persons that can be seated in the vehicle 10, for example.

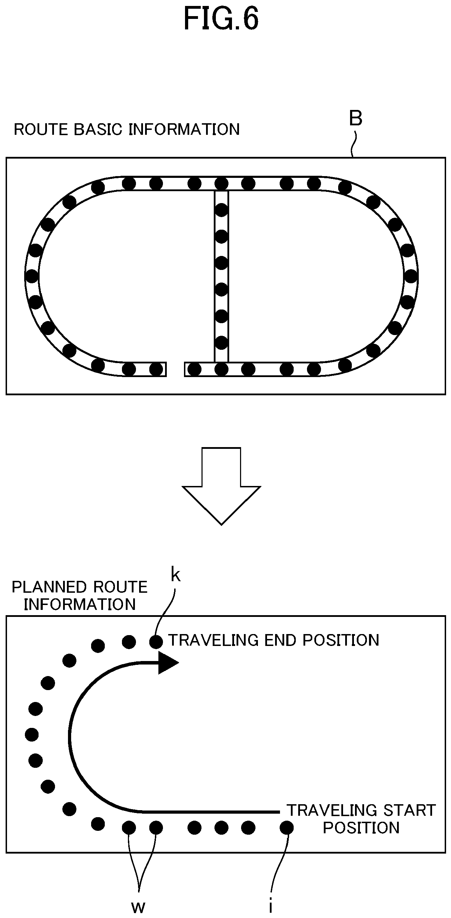

The management device 70 searches for a route to be traveled by the vehicle 10 from the waiting position of the vehicle 10 (i.e., the current location of the vehicle 10) to the desired pick-up location, and transmits information indicating such a route to the vehicle 10 (S104). In the following, the route to be traveled by the vehicle 10 is referred to as a "planned route", and the "information indicating the planned route" is referred to as "planned route information." In the autonomous driving system 1, the planned route information is a set of waypoints (W shown in FIG. 6) arranged along the planned route. The waypoint includes position information (coordinate value) within the vehicle operation area B. The generation of waypoints and planned route information will be described in detail later.

When not only the dispatch request but also the transportation request is received from the mobile terminal 90, i.e., the information on the desired pick-up location and information on the desired drop-off location are received from the mobile terminal 90, the management device 70 may search a planned route from the waiting location (current location) of the vehicle 10 to the desired pick-up location and a planned route from the desired pick-up location to the desired drop-off location, and transmit such information to the vehicle 10 in S104.

Upon receiving the planned route information, the vehicle 10 transmits a start notification indicating that the vehicle 10 has started to the management device 70 (S105), and starts traveling from the waiting location to the desired pick-up location (S106). The vehicle 10 travels in this manner when the vehicle 10 tracks the waypoints, which are included in the planned route information and continue from the waiting location to the desired pick-up location (i.e., to move toward the waypoint close to the current location). Upon arriving at the desired pick-up location, the vehicle 10 transmits a notification of the arrival to the management device 70 (S107). The management device 70 transmits the arrival notification of the vehicle 10 to the mobile terminal 90 of the user (S108). The vehicle 10 may directly transmit the arrival notification to the mobile terminal 90.

When the user gets in the vehicle 10 and the vehicle 10 detects that the user is seated through the load sensor 35 (or camera), the vehicle 10 transmits a pick-up completion notification to the management device 70 (S109). When the vehicle 10 has already received the planned route information on the route from the desired pick-up location to the desired drop-off location (destination) from the management device 70 and receives a start instruction from the user (S110), the vehicle 10 transmits the start notification indicating that the vehicle 10 has started to management device 70 (Sill), and starts traveling from the desired pick-up location to the desired drop-off location (S112). The start instruction of the user is entered in the control device 11 when the user performs a predetermined operation on the input device 38 provided in the vehicle 10, for example. The vehicle 10 travels when the vehicle 10 follows the waypoints included in the planned route information continuing from the desired pick-up location to the desired drop-off location in order.

Upon arriving at the desired drop-off location, the vehicle 10 transmits such notification to the management device 70 (S113). The management device 70 transmits the arrival notification to the mobile terminal 90 (S114). The management device 70 may transmit charges required for the transportation service by the vehicle 10 to the mobile terminal 90 as an arrival notification. Upon receiving a drop-off completion notification from the mobile terminal 90 (S115), the management device 70 transmits a drop-off confirmation request to the vehicle 10 (S116). Upon receiving the drop-off confirmation request, the vehicle 10 determines whether all the users have left the vehicle based on the output of the load sensor 35. Upon confirming that all the users have left, the vehicle 10 transmits a waiting notification to the management device 70 to notify that the vehicle 10 has transitioned to the waiting state (S117). The waiting state indicates that the vehicle 10 remains at a certain position until a next planned route is received, for example.

### [Function of Computing Device of Vehicle Management Device]

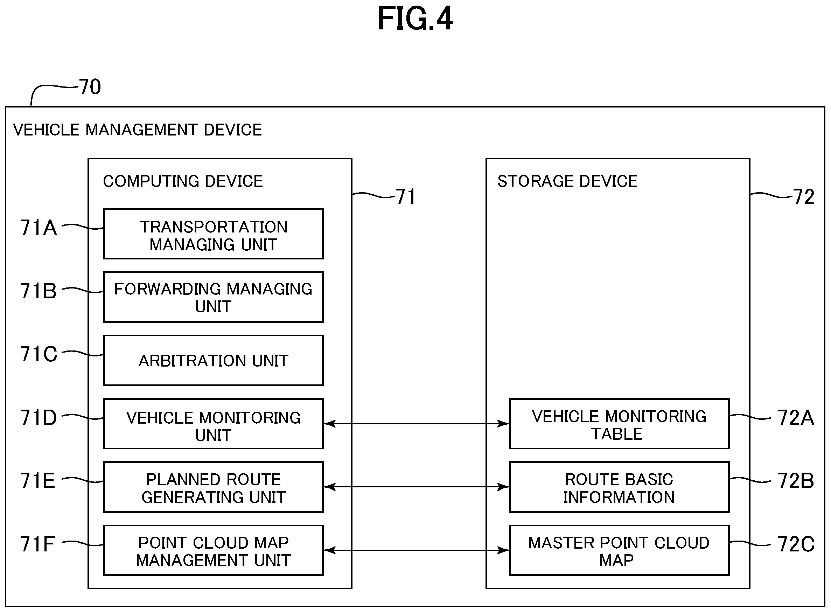

As shown in FIG. 4, the computing device 71 of the vehicle management device 70 functionally includes a transportation managing unit 71A, a vehicle monitoring unit 71D, and a planned route generating unit 71E so as to operate the management device 70 as described above. The computing device 71 includes a forwarding managing unit 71B and an arbitration unit 71C. These functions are implemented when the computing device 71 executes programs stored in the storage device 72.

### [Vehicle Monitoring Unit]

The vehicle 10 transmits information on the current location and the status of the vehicle 10 to the vehicle management device 70. As described above, the information on the state of the vehicle 10 may include whether the vehicle 10 is transporting a user (or waiting), the remaining amount of the battery, and whether there are any anomalies, for example. Such information is transmitted at predetermined time intervals. The vehicle monitoring unit 71D stores the received information on the vehicle 10 in a vehicle monitoring table 72A stored in the storage device 72. The vehicle monitoring unit 71D updates the vehicle monitoring table 72A whenever new information for each of the vehicles 10 is received.

The vehicle monitoring unit 71D may determine whether the vehicle 10 is available for transportation of a user based on the current location of the vehicle 10. For example, the vehicle monitoring unit 71D may determine whether the vehicle 10 is on a drivable route defined in the vehicle operation area B. If the vehicle 10 is not on a drivable route, that is, if the current location of the vehicle 10 is away from the drivable route defined in the vehicle operation area B by more than a predetermined threshold value, the vehicle monitoring unit 71D may determine that the vehicle 10 is not available and record such information in the vehicle monitoring table.

### [Transportation Managing Unit]

When the management device 70 receives a movement request (dispatch request and transportation request) for the vehicle 10 from the user, the transportation managing unit 71A moves the vehicle 10 in response to such a movement request. The transportation managing unit 71A selects a vehicle 10 to be directed to the desired pick-up location of the user. The transportation managing unit 71A may exclude a vehicle 10 that is away from the drivable route defined in the vehicle operation area (i.e., a vehicle 10 that is determined to be unavailable by the vehicle monitoring unit 71D) from the selection target. For example, the transportation managing unit 71A may exclude the vehicle 10 that is recorded in the vehicle monitoring table as being unavailable from the selection targets.

The transportation managing unit 71A transmits a movement command to the selected vehicle 10 to move from the current location of the vehicle 10 toward the desired pick-up location. Further, the transportation managing unit 71A transmits a movement command to the vehicle 10 to move from the desired pick-up location toward the desired drop-off location. The transportation managing unit 71A may transmit the planned route information generated by a planned route generating unit 71E, which will be described later, to the vehicle 10 as a movement command.

### [Forwarding Managing Unit]

The forwarding managing unit 71B transmits a command (forwarding command) to the vehicle 10 to move toward the forwarding location predetermined in the vehicle operation area B. For example, the forwarding location is a garage in which the vehicle 10 is stored. Another example of the forwarding location may be a charging station for charging the battery of the vehicle 10. For example, the forwarding managing unit 71B may transmit a forwarding command to the vehicle 10 when a predetermined time comes or when the remaining battery capacity falls below the threshold value. In the example of the management device 70, the forwarding managing unit 71B transmits the planned route information generated by the planned route generating unit 71E to the vehicle 10 as a forwarding command.

### [Planned Route Generating Unit]

When the management device 70 receives a request for moving the vehicle 10, the planned route generating unit 71E generates information on a route to be traveled by the vehicle 10 (planned route), that is, planned route information. As described above, one of the movement requests for the vehicle 10 is a movement from the current location (waiting location) of the vehicle 10 to the desired pick-up location of the user (i.e., dispatch). Another movement request for the vehicle 10 is a movement from the desired pick-up location to the desired drop-off location (destination) (i.e., transportation). Yet another movement request for the vehicle 10 is a movement of the vehicle 10 from the current location of the vehicle 10 to the forwarding position (i.e., forwarding). The storage device 72 stores the route basic information in advance. The route basic information indicates a route that the vehicle 10 can travel and is predetermined in the vehicle operation area B. The planned route generating unit 71E extracts a part of the route basic information as the planned route information.

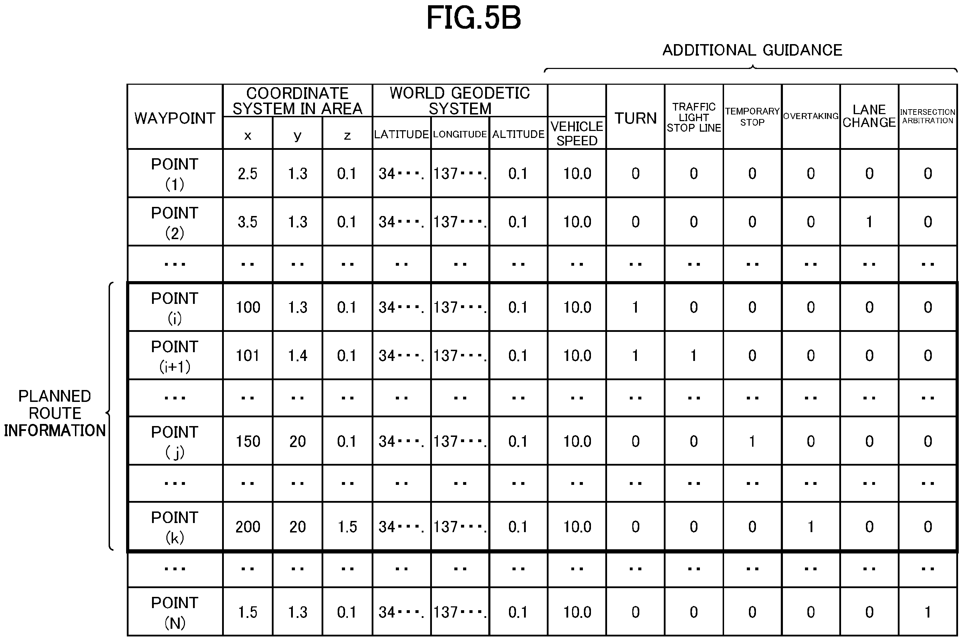

FIGs. 5A and 5B are diagrams for explaining the route basic information. As shown in FIG. 5A, the route basic information is composed of waypoints W that are arranged along the routes L1 and L2 on which the vehicles 10 can travel. The waypoints W may be arranged at approximately constant intervals (e.g., one or several meters apart) along the drivable routes L1 and L2. The route basic information has waypoints for all the drivable routes defined in the vehicle operation area B. As shown in FIG. 5B, each waypoint includes position data of positions (points) on the drivable route. Specifically, each waypoint has coordinate values (X, Y, Z) in the coordinate system defined in the vehicle operation area B.

The route basic information is different from the information that the vehicle 10 uses to estimate its current location, i.e. map information (information indicating objects in the vehicle operation area B). In the example of the autonomous driving system 1, the vehicle 10 uses a point cloud map as such map information. The point cloud map is stored in the storage device 13 of the vehicle 10.

When the management device 70 receives a movement request for the vehicle 10, the planned route generating unit 71E extracts some of the waypoints included in the route basic information and uses the extracted waypoints as planned route information. For example, as shown in FIGs. 6 and 5B, the planned route generating unit 71E extracts waypoints arranged from waypoint (i) representing the traveling start position to waypoint (k) representing the traveling end position as the planned route information. The management device 70 transmits the planned route information extracted in this manner to the vehicle 10 in the processing of the transportation managing unit 71A and the forwarding managing unit 71B.

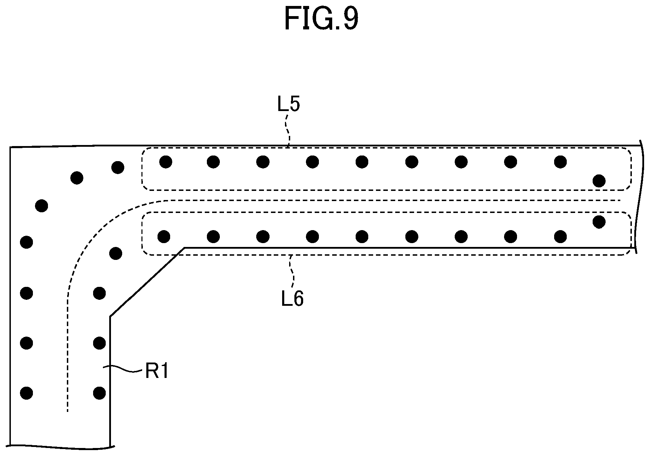

The drivable route predetermined in the vehicle operation area B desirably has an annular shape. That is, it is desirable that the drivable route is defined so that there is no dead end. In other words, it is desirable that all the waypoints defined in the route basic information have adjacent waypoints within a predetermined range in the direction in which the vehicle 10 moves forward. For example, as shown in FIG. 5A, the waypoint (1) at the top of the route basic information in FIG. 5B is located in the direction in which the vehicle 10 moves forward with respect to the waypoint (N) at the bottom of the route basic information, and the distance between the waypoint (1) and the waypoint (N) is the same as the distance between the other waypoints. If the drivable route has a single road R1, as shown in FIG. 9 for example, two rows L5 and L6 of waypoints connected at the ends may be defined as the road R1. This allows the vehicle 10 to reach the traveling end position by moving forward regardless of where the traveling start position and the traveling end position are on the drivable route.

As described above, the planned route generating unit 71E is provided in the vehicle management device 70 in the autonomous driving system 1. This reduces the processing load to be performed in the vehicle 10. The vehicle management device 70 corresponds to the route generating device in the claims. The planned route generating unit 71E may be provided not in the vehicle management device 70 but in the control unit 11 of the vehicle 10.

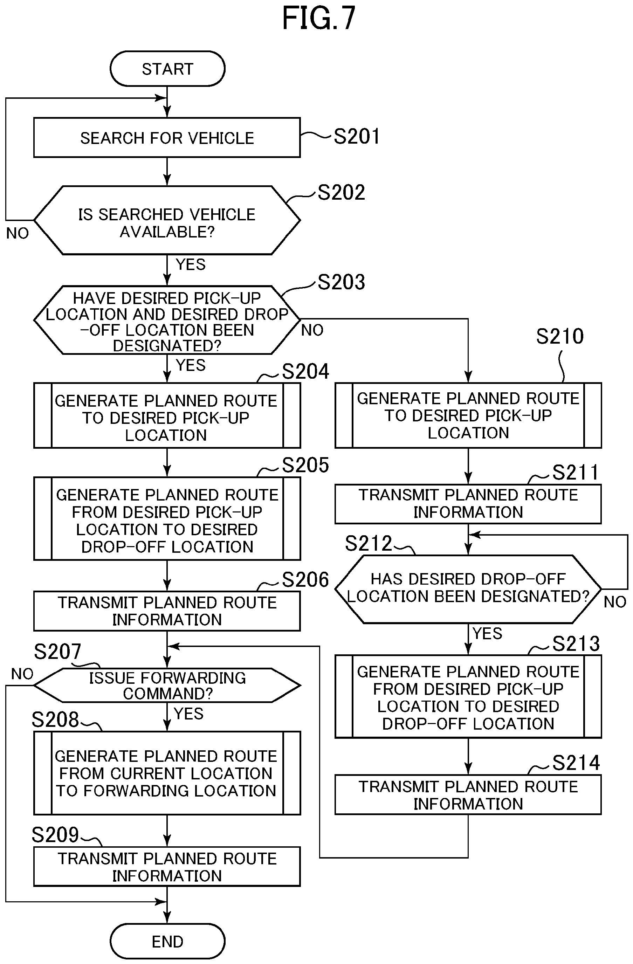

FIG. 7 is a flow chart showing an example of processing executed by the management device 70. FIG. 7 shows examples of processing executed by the transportation managing unit 71A, the forwarding managing unit 71B, and the planned route generating unit 71E.

When the management device 70 receives a vehicle dispatch request from the mobile terminal 90, the transportation managing unit 71A searches for a vehicle 10 waiting at a location closest to the user (mobile terminal 90) (S201). The transportation managing unit 71A refers to a current location of each vehicle 10 recorded in the vehicle monitoring table 72A, and searches for the vehicle 10 closest to the user (mobile terminal 90) based on the position information (latitude, longitude, altitude) sent from the mobile terminal 90. Subsequently, the transportation managing unit 71A determines whether the searched vehicle 10 is available (S202). If the searched vehicle 10 is available, the transportation managing unit 71A selects such a vehicle 10 as a vehicle to be directed to the pick-up location of the user. On the other hand, if the searched vehicle 10 is not available, the transportation managing unit 71A executes the search process of S201 again.

Next, the transportation managing unit 71A determines whether the information indicating the desired drop-off location has been received in addition to the information indicating the desired pick-up location, in other words, whether both the desired pick-up location and the desired drop-off location have been designated (S203). If the management device 70 has received the desired pick-up location and drop-off location, the planned route generating unit 71E generates planned route information indicating the route from the current location of the vehicle 10 selected in S201 to the desired pick-up location (S204) and also generates planned route information indicating the route from the desired pick-up location to the desired drop-off location (S205). The transportation managing unit 71A transmits the generated two pieces of planned route information to the vehicle 10 (S206).

In S203, if the management device 70 has received only the desired pick-up location and not received the desired drop-off location, the planned route generating unit 71E generates planned route information indicating the route from the current location of the vehicle 10 selected in S201 to the desired pick-up location (S210), and the transportation managing unit 71A transmits the planned route information generated in S207 to the vehicle 10 as a dispatch command (S211).

Subsequently, the transportation managing unit 71A determines whether the desired drop-off location has been received (S212). Upon receiving the desired drop-off location, the planned route generating unit 71E generates planned route information indicating the route from the desired pick-up location to the desired drop-off location (S213). The transportation managing unit 71A transmits the planned route information generated in S213 to the vehicle 10 as a transportation command (S214).

The forwarding managing unit 71B determines whether to issue a forwarding command for the vehicle 10 (S207). Specifically, the forwarding managing unit 71B determines whether the current time has reached the time at which the vehicle 10 is returned to the forwarding location or whether the remaining battery level is lower than the threshold value. If it is determined that a forwarding command is to be issued, the planned route generating unit 71E generates planned route information indicating the route from the current location of the vehicle 10 to the forwarding location (S208). The forwarding managing unit 71B transmits the generated planned route information to the vehicle 10 as a forwarding command (S209). The forwarding managing unit 71B may execute processing of S209 to S207 for each of the vehicles 10 included in the autonomous driving system 1. The above described is examples of the processing executed by the transportation managing unit 71A, the forwarding managing unit 71B, and the planned route generating unit 71E.

### [Procedure of Planned Route Generating Unit]

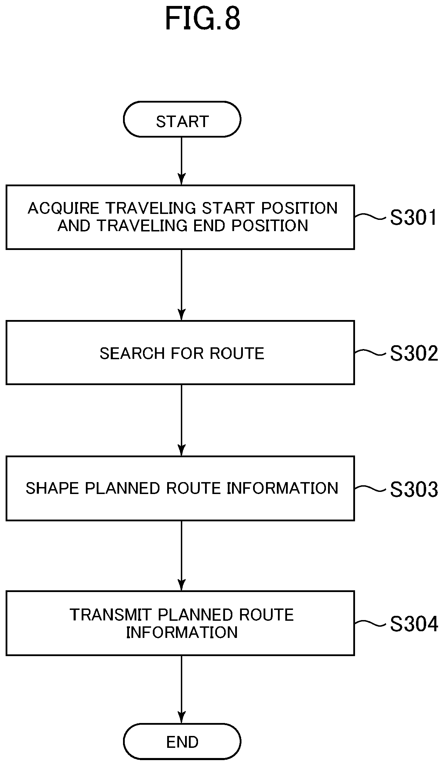

FIG. 8 is a flow chart showing an example of processing executed by the planned route generating unit 71E. The processing is executed in S204, S205, S208, S210, and S213 shown in FIG. 7, for example.

The planned route generating unit 71E first acquires a traveling start position and a traveling end position (S301).

For dispatching a vehicle, the traveling start position is the waiting location (current location) of the vehicle 10 selected in the processing of the transportation managing unit 71A, and the traveling end position is the desired pick-up location. The planned route generating unit 71E refers to the vehicle monitoring table 72A, for example, and acquires the current location (i.e., the traveling start position) of the vehicle 10 selected by the transportation managing unit 71A. In this case, the traveling start position is represented by the values (X, Y, Z) in the coordinate system in the vehicle operation area B. The planned route generating unit 71E refers to the route basic information shown in FIG. 5B, and acquires the waypoint corresponding to the traveling start position (waypoint closest to the traveling start position).

The desired pick-up location is the current location of the user, for example. The management device 70 receives the current location (latitude, longitude, altitude) obtained by the GNSS receiver 95 of the mobile terminal 90 together with a dispatch request. As shown in FIG. 5B, the route basic information includes values in the world geodetic system (latitude, longitude, altitude) as the position information of the respective waypoints. The management device 70 acquires the waypoint corresponding to the position information of the world geodetic system received from the mobile terminal 90 as the traveling end position. Alternatively, the display device 93 of the mobile terminal 90 may display map information including a map of the vehicle operation area B and coordinate values of respective points on the map. The mobile terminal 90 may transmit the coordinate values (X, Y, Z) of the position selected by the user on the map displayed on the display device 93 to the management device 70 as the desired pick-up location.

In the case of transportation, the traveling start position of the vehicle 10 is the desired pick-up location, and the traveling end position of the vehicle 10 is the desired drop-off location. The desired pick-up location can be acquired by the same processing as in the case of dispatching the vehicle. The desired drop-off location may be specified on the mobile terminal 90 by the user. For example, the mobile terminal 90 may transmit the coordinate values (X, Y, Z) of the position specified by the user on the map displayed on the display device 93 to the management device 70 as the desired drop-off location. Alternatively, the mobile terminal 90 may transmit the coordinates (X, Y, Z) of the facility selected by the user in the vehicle operation area B to the management device 70 as the desired drop-off location. The desired drop-off location may be specified by the vehicle 10 instead of the mobile terminal 90. For example, the vehicle 10 may transmit the coordinate values (X, Y, Z) of the position specified by the user on the map displayed on the display device 37 to the management device 70 as the desired drop-off location.

In the case of forwarding a vehicle, the traveling start position of the vehicle 10 is the current location of the vehicle 10, and the traveling end position of the vehicle 10 is the forwarding location.

The planned route generating unit 71E searches for a route from the waypoint corresponding to the traveling start position to the waypoint corresponding to the traveling end position (S302). As shown in FIGs. 5A and 5B, this processing extracts a plurality of consecutive waypoints from the waypoint corresponding to the traveling start position to the waypoint corresponding to the traveling end position (i.e., planned route information).

Dijkstra, Bellman-Ford, and A-star algorithms can be used for route search. When these methods are used, each waypoint may be used as a node, and distances between the waypoints may be defined as a cost. In this way, the shortest route in distance connecting the traveling start position and the traveling end position is obtained.

In another example, each waypoint may be used as a node, and the time required to move between waypoints may be defined as a cost. In this way, the shortest route in time connecting the traveling start position and the traveling end position is obtained. If it takes a lot of time to pass an intersection, a large cost may be defined between the waypoints corresponding to the intersection. Further, if it takes a lot of time to pass a plurality of uphills, a large cost may be defined between the waypoints corresponding to the uphills.

The planned route generating unit 71E may shape the planned route information obtained in S302 according to the state and the specification of the vehicle 10 (selected by the transportation managing unit 71A) using the planned route information (S303). As shown in FIG. 5B, the route basic information includes not only position information but also additional guidance, such as "vehicle speed" and "turn flag", for each waypoint. For example, "vehicle speed" shows the vehicle speed that the vehicle 10 has when passing through the waypoint, and "turn flag" shows the control for right turn (or left turn) to the vehicle 10 when passing through the waypoint (e.g., flashing of flashers 24R and 24L). The vehicle 10 may not have a function of executing such a control based on the "turn flag." In this case, the planned route generating unit 71E may eliminate the "turn flag" from the planned route information generated in S302. The vehicle 10 may not have a function of executing control based on the "vehicle speed." In this case, the planned route generating unit 71E may eliminate the "vehicle speed" from the planned route information generated in S302. That is, the planned route generating unit 71E may shape the planned route information obtained in S302 according to the vehicles 10 selected by the transportation managing unit 71A, such as eliminating unnecessary additional guidance. The additional guidance will be described in detail later. Finally, the management device 70 transmits the planned route information shaped in S303 to the vehicle 10 (S304). The above described is examples of the processing executed by the planned route generating unit 71E.

### [Additional Guidance]

As described above, the route basic information may include additional guidance in association with the waypoint indicating the position information. The additional guidance is different from the position information of the waypoint. The additional guidance is information indicating an operation to be performed by the vehicle 10 arriving at the waypoint corresponding to such additional guidance, or an allowable operation for the vehicle 10 arriving at the waypoint corresponding to such additional guidance. The additional guidance may rely on traffic rules.

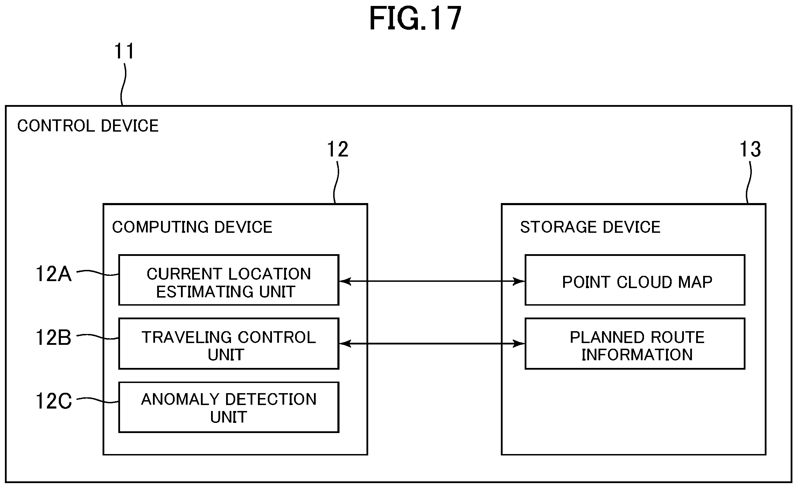

As shown in FIG. 5B, an example of additional guidance is vehicle speed. When the vehicle 10 is traveling along the waypoints representing the planned route, the control device 11 (traveling control unit 12B, see FIG. 17) of the vehicle 10 controls the driving mechanism 21 and the braking mechanism 22 so as to travel at a speed lower than the speed associated with the respective waypoints.

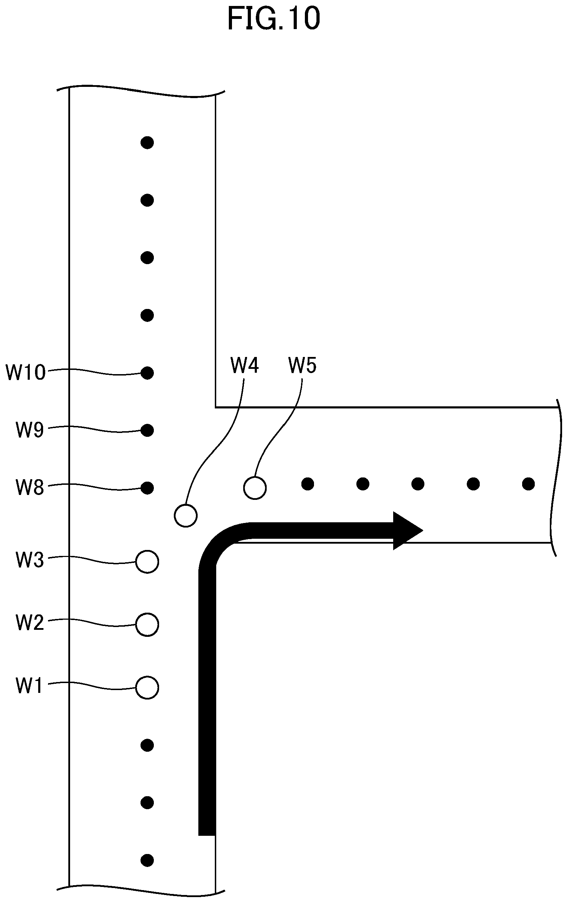

As shown in FIG. 5B, another example of the additional guidance is a turn flag. FIG. 10 is a diagram for explaining the turn flag, in which a black circle indicates a waypoint to which "turn flag: OFF" (0 in FIG. 5B) is assigned, and a white circle indicates a waypoint to which "turn flag: ON" (1 in FIG. 5B) is assigned. When the vehicle 10 reaches a waypoint at which the turn flag is ON (waypoint W1 in FIG. 10), the control device 11 (traveling control unit 12B, see FIG. 17) of the vehicle 10 determines whether to blink the flashers 24R and 24L based on the subsequent one or more waypoints (one or more waypoints close to the position at which the vehicle 10 arrives) among the waypoints included in the planned route information.

In the example of FIG. 10, when the vehicle 10 reaches the waypoint W1, the control device 11 determines whether to blink the right flasher 24R or the left flasher 24L or not to blink both of the flashers 24R and 24L based on the position of the waypoint subsequent to the waypoint W1 and the traveling direction of the vehicle 10. For example, if the waypoints closer to the waypoint W1 are W2 to W5, their positions are shifted to the right with respect to the traveling direction of the vehicle 10. As such, the control device 11 determines that the vehicle 10 turns right, and thus flashes the right flasher 24R. On the other hand, if the waypoints closer to the waypoint W1 are W2, W3, and W8 to W10, their positions are in the traveling direction of the vehicle 10. As such, the control device 11 determines that the vehicle 10 travels straight, and thus does not blink the left and right flashers 24R and 24L.

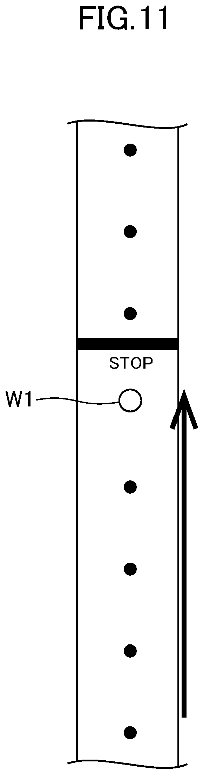

As shown in FIG. 5B, still another example of additional guidance is a traffic light stop line flag. FIG. 11 is a diagram for explaining the traffic light stop line flag, in which a black circle indicates a waypoint to which "traffic light stop line flag: OFF" (0 in FIG. 5B) is assigned, and a white circle indicates a waypoint to which "traffic light stop line flag: ON" (1 in FIG. 5B) is assigned. When the vehicle 10 reaches the waypoint where the traffic light stop line flag is ON (the waypoint where reference numeral W1 is given in FIG. 11), the control device 11 of the vehicle 10 (traveling control unit 12B, see FIG. 17) detects a color of the traffic signal based on an image acquired through the front camera 32, and controls the braking mechanism 22 to stop the vehicle 10 if the traffic light is red or yellow. Subsequently, the control device 11 determines whether the color of the traffic light has changed to blue based on an image acquired through the front camera 32, and controls the driving mechanism 21 to start the vehicle 10 when the color of the traffic light is changed to blue.

The control device 11 (traveling control unit 12B, see FIG. 17) of the vehicle 10 may start the processing described above before the waypoint at which the traffic light stop line flag is ON. That is, the control device 11 may read a plurality of waypoints subsequent to the waypoint corresponding to the current location among the waypoints included in the planned route information. If the waypoint at which the traffic light stop line flag is ON (waypoint W1 in FIG. 11) is included in the plurality of waypoints, the control device 11 may detect a color of the traffic light based on an image acquired through the front camera 32. If the traffic light is red or yellow, the control device 11 controls the braking mechanism 22 to stop the vehicle 10 at a position corresponding to the waypoint at which the traffic light stop line flag is ON.

As shown in FIG. 5B, still another example of additional guidance is a temporary stop line flag. When the vehicle 10 reaches the waypoint at which the temporary stop line flag is ON, the control device 11 (traveling control unit 12B, see FIG. 17) of the vehicle 10 controls the braking mechanism 22 to stop the vehicle 10. The control device 11 may determine whether there is an obstacle based on an image acquired through the front camera 32, for example. This determination may continue for several seconds. If no obstacle is detected, the control device 11 may control the driving mechanism 21 to start the vehicle 10.

The additional guidance may further include a crosswalk stop line flag. When the vehicle 10 reaches the waypoint at which the crosswalk stop line flag is ON, the control device 11 of the vehicle 10 controls the braking mechanism 22 to stop the vehicle 10. The control device 11 may determine whether there is an obstacle (including a person) based on an image acquired through the front camera 32, for example. This determination may continue for several seconds. If no obstacle is detected, the control device 11 may control the driving mechanism 21 to start the vehicle 10.

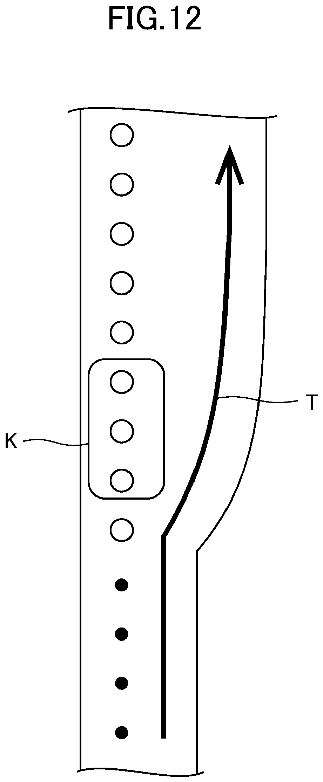

As shown in FIG. 5B, yet another example of additional guidance is an overtaking enable flag. FIG. 12 is a diagram for explaining the overtaking enable flag, in which a black circle indicates a waypoint to which "overtaking enable flag: OFF" (0 in FIG. 5B)" is assigned, and a white circle indicates a waypoint to which "overtaking enable flag: ON" (1 in FIG. 5B)" is assigned. When the vehicle 10 reaches the waypoint at which the overtake flag is ON, the control device 11 (traveling control unit 12B, see FIG. 17) of the vehicle 10 determines whether there is an obstacle in front of the vehicle 10 based on an image acquired through the front camera 32. If there is no obstacle, the vehicle 10 travels along the waypoints included in the planning route information. If there is an obstacle K on the route defined by the waypoints, as indicated by an arrow T in FIG. 12, the vehicle 10 travels in a range away from the waypoints to the right or left and within a predetermined distance from the waypoints. That is, the overtaking enable flag is a guidance for allowing the vehicle to travel at a position away from the waypoint by a predetermined distance.

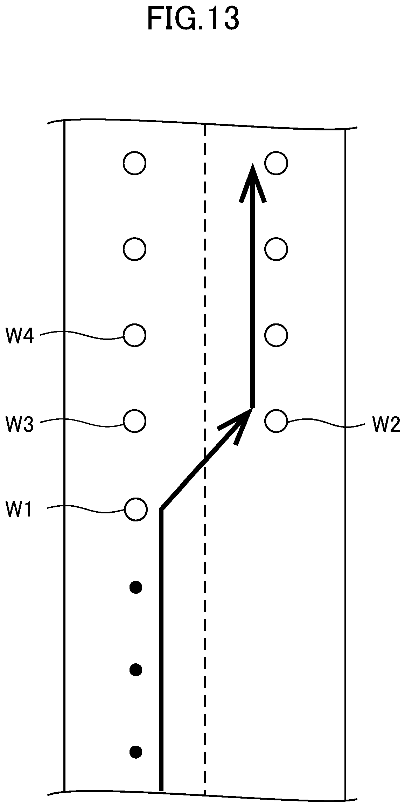

As shown in FIG. 5B, yet another example of additional guidance is an overtaking enable flag. FIG. 13 is a diagram for explaining the overtaking enable flag, in which a black circle indicates a waypoint to which "lane change flag: OFF" (0 in FIG. 5B)" is assigned, and a white circle indicates a waypoint to which "lane change flag: ON" (1 in FIG. 5B) " is assigned. As shown in FIG. 13, the planned route information is generated such that waypoints (white circles) to which "lane change flag: ON" is assigned and waypoints (white circles) in the adjacent lane (overtaking lane) (e.g., waypoints to which "lane change flag: ON" is assigned) are arranged in two rows in a predetermined section. Unlike the example of FIG. 13, the planned route information may be generated such that waypoints (white circles) to which "lane change flag: ON" is assigned and waypoints to which "lane change flag: OFF" is assigned as the waypoints corresponding to the adjacent lane (overtaking lane) may be arranged in two rows.

The control device 11 (traveling control unit 12B, see FIG. 17) reads a plurality of waypoints subsequent to the waypoint corresponding to the current location. If the waypoint at which the lane change flag is ON (waypoint W1 in FIG. 13) is included in the plurality of waypoints, the control device 11 flashes the flasher 24R, and determines if there is another vehicle approaching from the right rear of vehicle 10 based on the output of the external sensor group 30 (e.g., rear camera 33, LiDAR 31, millimeter-wave radar). If there is no other vehicle approaching the vehicle, the control device 11 controls the steering mechanism 23 to move the vehicle 10 toward the waypoint W2 that is shifted to the right with respect to the traveling direction so far.

If it is determined that there is another vehicle approaching the vehicle based on the output of the external sensor group 30, the control device 11 does not change the lane but moves the vehicle 10 toward the waypoints W3, W4... arranged along the traveling direction so far. The waypoints W3, W4... are provided with "lane change flag: ON", and thus, the control device 11 also determines if there is another vehicle approaching from the right rear of the vehicle 10 at the waypoints W3, W4... similarly to the processing at the waypoint W1 based on the output of the external sensor group 30. When there is no other vehicle approaching the vehicle, the control device 11 controls the steering mechanism 23 to move the vehicle 10 toward the waypoint that is shifted to the right with respect to the traveling direction so far.

In the example of FIG. 13, "lane change flag: ON" is given to the waypoint corresponding to the right lane. As such, when an obstacle is found while traveling in the right lane, for example, the control device 11 may execute the opposite processing described above. That is, the control device 11 may determine whether there is another vehicle approaching from the left rear of the vehicle 10 based on the output of the external sensor group 30. If there is no other vehicle approaching the vehicle, the control device 11 may control the steering mechanism 23 to move the vehicle 10 toward the waypoint that is shifted to the left with respect to the traveling direction so far.

### [Intersection Arbitration Flag]

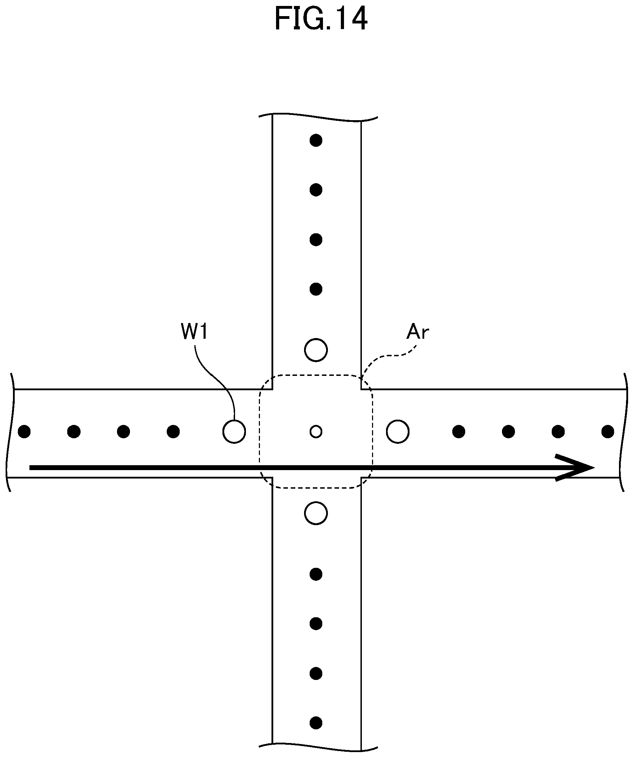

As shown in FIG. 5B, still another example of additional guidance is an intersection arbitration flag. FIG. 14 is a diagram for explaining the intersection arbitration flag, in which a black circle indicates a waypoint to which " intersection arbitration flag: OFF" (0 in FIG. 5B) is assigned, and a white circle indicates a waypoint to which " intersection arbitration flag: ON" (1 in FIG. 5B) is assigned. "Intersection arbitration flag: ON" is given to the waypoint before the intersection. When the vehicle 10 reaches the waypoint W1 at which the intersection arbitration flag is ON, the control device 11 (traveling control unit 12B, see FIG. 17) of the vehicle 10 transmits an inquiry to the management device 70 as to whether an approach to the intersection is allowed. The vehicle 10 enters the intersection or waits before the intersection based on the answer from management device 70.

The computing device 71 of the management device 70 functionally includes an arbitration unit 71C (see FIG. 4). The position of the vehicle 10 recorded in the vehicle monitoring table 72A (see FIG. 4) is updated every predetermined time (e.g., one or several seconds). When the management device 70 receives an inquiry from the vehicle 10 as to whether the vehicle 10 is allowed to enter the intersection, the arbitration unit 71C refers to the vehicle monitoring table to determine whether there is another vehicle 10 that has entered the intersection related to the inquiry. That is, the arbitration unit 71C determines whether there is another vehicle 10 having the position information within a predetermined range Ar (see FIG. 14) defined at the intersection related to the inquiry. If no other vehicle 10 has entered the intersection, the arbitration unit 71C sends a response to the vehicle 10 to permit an entry to the intersection. In contrast, if there is another vehicle 10 entering the intersection, the arbitration unit 71C sends a response to instruct the vehicle 10 to wait before the intersection. Subsequently, the arbitration unit 71C refers to the vehicle monitoring table every predetermined time (e.g., one or several seconds), and determines if there is no other vehicle 10 entering the intersection related to the inquiry. When there is no other vehicle 10 in the intersection, the arbitration unit 71C transmits a response to the vehicle 10 to permit an entry to the intersection. The examples of the additional guidance have been described above.

The processing executed by the management device 70 and the vehicle 10 as to the traveling at the intersection is not limited to the examples described above. The vehicle 10 may receive a dummy passage allowance from the management device 70 at the entrance of the intersection and return the dummy passage allowance to the management device 70 at the exit of the intersection. Specifically, when the vehicle 10 reaches the waypoint W1 at which the intersection arbitration flag is ON, the control device 11 requests the management device 70 to send a dummy passage allowance. The issuance of the passage allowance is recorded in the storage device 72, and the arbitration unit 71C of the management device 70 refers to the storage device 72 to determine whether there is a vehicle to which the passage allowance is issued. If there is no vehicle to which the passage allowance is issued, a dummy passage allowance is issued to the vehicle 10 requesting the passage allowance. That is, the arbitration unit 71C notifies the vehicle 10 that passage is allowed, and records in the storage device 72 that the passage allowance is issued to the vehicle 10. When reaching the waypoint indicating the exit of the intersection, the vehicle 10 returns the dummy passage allowance to the management device 70. That is, the vehicle 10 notifies the management device 70 that the vehicle 10 has exited the intersection. The arbitration unit 71C records in the storage device 72 that the dummy passage allowance has been returned. The example of the additional guidance has been described above.

### [Other Examples of Route Basic Information]

As described above, the planned route generating unit 71E refers to the route basic information (FIG. 5B) and searches for a route from the traveling start position to the traveling end position by using known route search algorithms. In an example, the planned route generating unit 71E executes known route search algorithms using all the waypoints representing the drivable routes as nodes.

Alternatively, the route search may not use a waypoint included in the route basic information. For example, the storage device 72 may store first basic information indicating a predetermined drivable route in the vehicle operation area B. The first basic information is configured to reduce computational load for the route search. For example, the first basic information includes fewer nodes than the waypoints included in the route basic information shown in FIGs. 5A and 5B. When such first basic information is used, the storage device 72 may previously store information associating a route obtained from the first basic information with a waypoint. In the following, information associating a route obtained from the first basic information with a series of waypoints is referred to as second basic information. The planned route generating unit 71E may perform route search using the first basic information and refer to the second basic information, thereby acquiring waypoints corresponding to the obtained route and using the waypoints as planned route information. In this case, the first basic information and the second basic information constitute route basic information.

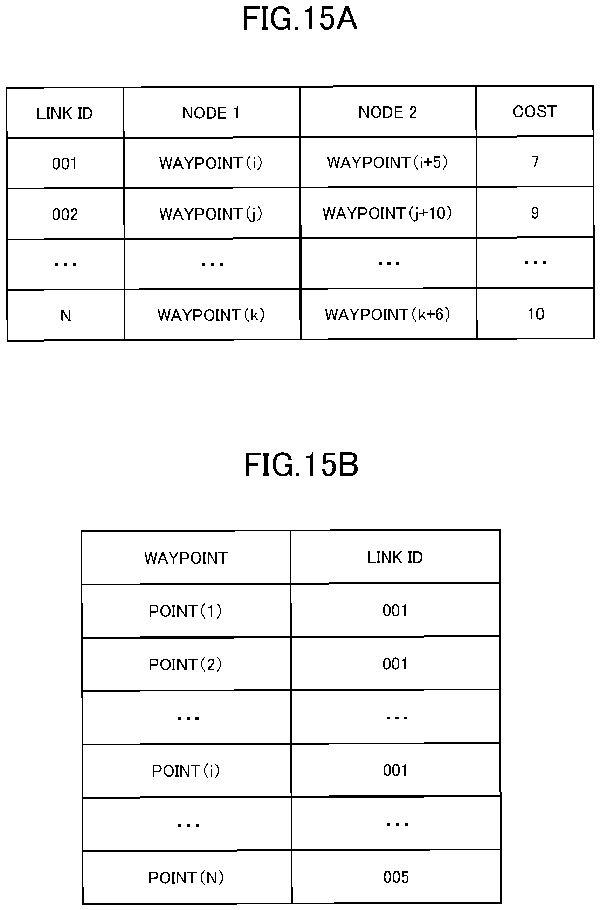

FIG. 15A is a diagram for explaining an example of the first basic information. FIG. 15B is a diagram for explaining an example of the second basic information. The first basic information shown in FIG. 15A defines a plurality of links and nodes that are both ends of the links. The nodes may correspond to intersections on the drivable routes in the vehicle operation area B, and to waypoints of branching and merging points. A link is associated with its length (distance between nodes) and time required to pass the link as a cost. In the second basic information shown in FIG. 15B, links are respectively associated with the waypoints. In the second basic information, all of the waypoints in the drivable route may be respectively associated with the links. The planned route generating unit 71E performs route search using the first basic information and specifies a route (nodes and links) from the traveling start position to the traveling end position acquired in S301 (see FIG. 8). Subsequently, the planned route generating unit 71E acquires waypoints corresponding to the acquired route (nodes and links) by referring to the second basic information, and uses the acquired waypoints as the planned route information. As shown in FIG. 6, this method also enables to extract some of the entire waypoints (route basic information) representing the drivable route as the planned route information. The number of nodes defined by the first basic information is smaller than the number of all of the waypoints representing the drivable route in the vehicle operation area B. This serves to reduce the computational load of route search.

The first basic information may not include nodes corresponding to an intersection, a branch point, and a junction. For example, the first basic information may define lanes. Specifically, the relationship between the lanes and the cost for passing through the lanes may be defined in the first basis information. The relationships between lanes include continuation, intersection, adjacent, and branching, for example. The continuation indicates the relationship between the lanes that can be moved in normal driving without changing lanes, for example. The intersection indicates the relationship between lanes having potential collisions. The adjacent indicates the relationship between lanes that are neither connected nor intersecting but adjacent to each other. The branching indicates being too small to be treated as an intersection, such as an entrance from a road to a parking lot. In the second basic information, lanes may be respectively associated with all the waypoints on the drivable route. The planned route generating unit 71E performs a route search using the first basic information and specifies a route (lane) from the traveling start position to the traveling end position that are acquired in S301. Subsequently, the planned route generating unit 71E acquires the waypoints corresponding to the acquired route (lane) by referring to the second basic information, and uses the acquired waypoints as the planned route information. As shown in FIGs. 7A and 7B, this manner also enables to extract some of the entire waypoints representing the drivable routes in the vehicle operation area B as the planned route information. The number of lanes defined by the first basic information is smaller than the number of the entire waypoints representing the drivable route in the vehicle operation area B, whereby the computational load of route search can be reduced.

### [Dividing Planned Route]

The planned route generating unit 71E may divide a planned route that continues from the traveling start position to the traveling end position into a plurality of routes (e.g., first partial route and second partial route). That is, the planned route generating unit 71E may divide the waypoints indicating the planned route continuing from the traveling start position to the traveling end position into the waypoints corresponding to the first partial route and the waypoints corresponding to the second partial route, and transmit such waypoints to the vehicle 10.

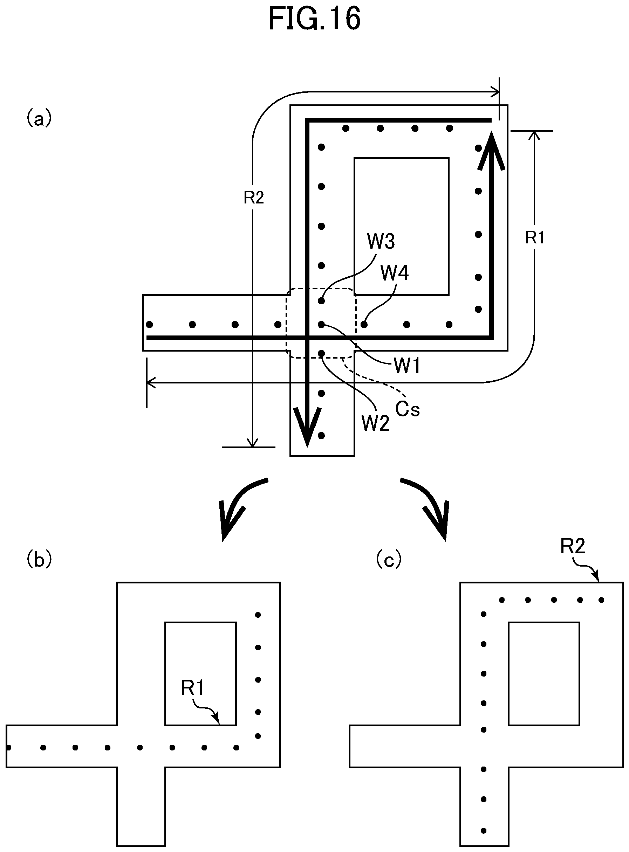

FIG. 16 is a diagram for explaining such processing of the planned route generating unit 71E. In the example in FIG. 16, the planned route has a first partial route R1 and a second partial route R2 that intersect at an intersection Cs. Such an intersection of the two partial routes R1 and R2 can be generated when a right turn at the intersection Cs is prohibited, for example. As will be described later, the vehicle 10 moves toward the waypoint closest to its current location among the waypoints in the received planned route information. As such, when the vehicle 10 reaches the intersection Cs, that is, when the vehicle 10 reaches the waypoint W1 in FIG. 16, the waypoints W2, W3, and W4 are located in similar proximity from the waypoint W1, and this may cause the vehicle 10 to make a wrong direction of travel. In order to avoid such a situation, when the first partial route R1 and the second partial route R2 intersect, as shown in FIGs. 16B and 16C, the planned route generating unit 71E divides the waypoints indicating the planned route into waypoints corresponding to the first partial route and waypoints corresponding to the second partial route.

The planned route generating unit 71E may transmit the waypoints corresponding to the first partial route R1 and the waypoints corresponding to the second partial route R2 to the vehicle 10 at different timings. For example, the planned route generating unit 71E may first transmit only the waypoints of the first partial route R1 to the vehicle 10, and transmit the second partial route R2 to the vehicle 10 when the vehicle 10 reaches the waypoint at the end of the first partial route R1. Alternatively, the planned route generating unit 71E may transmit the waypoints of the first partial route R1 and the waypoints of the second partial route R2 at substantially the same time. In this case, for the purpose of enabling the control device 11 of the vehicle 10 to determine which of the first partial route information and the second partial route information is to be referred to first, the planned route generating unit 71E may attach information indicating the order to the first portion route information and the second partial route information to be sent to the vehicle 10.

For example, the planned route generating unit 71E may determine whether the planned route includes two partial routes R1 and R2 intersecting each other as follows: When the first basic information described above is used for the route search and two links (or lanes) intersect each other, the intersection may be indicated in the first basic information. If two intersecting links (or lanes) are selected as a result of the route search, the planned route may be divided into the two partial routes such that one of the links is included in the first partial route and the other is included in the second partial route.

In another example, additional information indicating the intersection Cs (e.g., an ID of the intersection) may be added to the waypoints included in the intersection Cs. The planned route generating unit 71E may determine whether the planned route includes two partial routes R1 and R2 intersecting each other based on such additional information. For example, when the number of waypoints including the ID of the same intersection among the waypoints included in the planning route exceeds a threshold value, it may be determined that the planning route includes two partial routes intersecting each other at the intersection Cs.

### [Processing Performed in Autonomous Vehicle]

FIG. 17 is a block diagram showing functions of the computing device 12 of the autonomous vehicle 10. The computing device 12 functionally includes a current location estimating unit 12A, a traveling control unit 12B, and an anomaly detection unit 12C.

### [Current Location Estimating Unit]

The current location estimating unit 12A estimates a current location of the vehicle 10. As described above, the vehicle 10 has the external sensor group 30 for outputting surrounding information indicating positions of objects in the surrounding of the vehicle 10. The external sensor group 30 includes the LiDAR 31 and the cameras 32 and 33, for example. The storage device 13 stores map information indicating the positions of objects in the vehicle operation area B. The current location estimating unit 12A matches the surrounding information obtained through the external sensor group 30 with the map information recorded in the storage device 13, thereby estimating the current location of the vehicle 10. For example, the map information is a three-dimensional point cloud map. The surrounding information is, for example, point cloud data acquired through the LiDAR 31. The current location estimating unit 12A outputs the coordinates of the position where the point group data in the point cloud map is matched, that is, the coordinate values (X, Y, Z) in the coordinate system defined in the vehicle operation area B, as the position of the vehicle.

The map information stored in the storage device 13 (specifically, three-dimensional point cloud map) is about the entire vehicle operation area B. As such, when the vehicle 10 starts traveling toward the desired pick-up location and toward the desired drop-off location, the management device 70 does not need to send the map information to the vehicle 10. The map information generally has a large amount of data. In the autonomous driving system 1, the map information is not required to be sent to the vehicle 10 at the start of traveling of the vehicle 10, and thus, troubles related to the reception of the map information does not occur and the vehicle 10 can smoothly start the traveling toward the desired pick-up location or desired drop-off location.

### [Traveling Control Unit]

The traveling control unit 12B refers to the planned route information, which is received from the management device 70 and stored in the storage device 13, to control the driving mechanism 21, the braking mechanism 22, and the steering mechanism 23. The traveling control unit 12B controls the driving mechanism 21, the braking mechanism 22, and the steering mechanism 23 so that the vehicle 10 travels toward the waypoint closest to the current location of the vehicle 10. When the vehicle speed is associated with a waypoint included in the route basic information (see FIG. 5B), the driving control unit 12B may control the driving mechanism 21 so that the vehicle 10 travels within the range of the vehicle speed.

When the vehicle 10 arrives at the waypoint to which the additional guidance described with reference to FIGs. 6A and 10 to 14 is associated, the traveling control unit 12B may control the driving mechanism 21, the braking mechanism 22, the steering mechanism 23, and the flashers 24R and 24L so that the above-described operation predetermined for the additional guidance is performed.

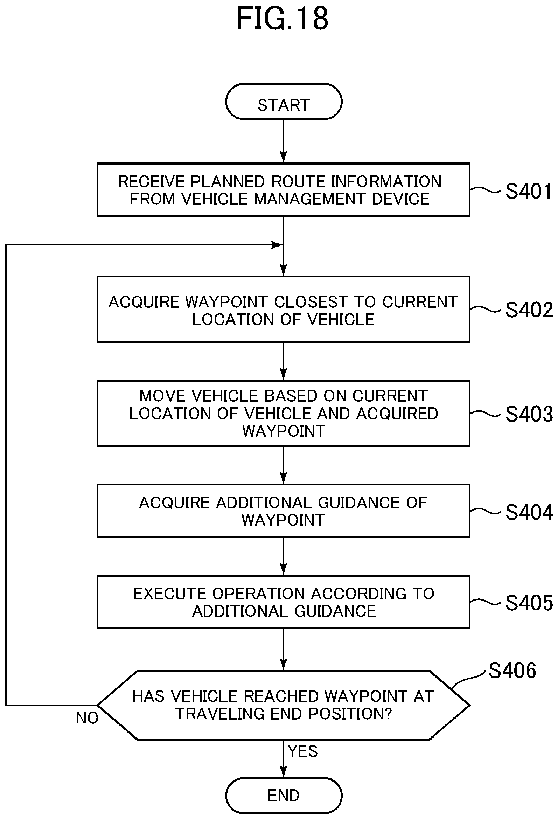

FIG. 18 is a diagram for explaining an example of processing executed by the control device 11 during the traveling. The control device 11 first receives the planned route information from the management device 70 (S401). The planned route information is stored in the storage device 13. Subsequently, the control device 11 (traveling control unit 12B) acquires a waypoint closest to the current location of the vehicle 10 calculated by the processing of the current location estimating unit 12A from the waypoints included in the planned route information (S402). The traveling control unit 12B controls the driving mechanism 21, the braking mechanism 22, and the steering mechanism 23 based on the current location of the vehicle 10 and the waypoint acquired in S402 (S403). That is, the traveling control unit 12B controls the driving mechanism 21 and other mechanisms so that the vehicle 10 is directed to the waypoint acquired in S402.

The traveling control unit 12B acquires additional guidance (e.g., intersection arbitration flag described above) associated with the waypoint acquired in S402 (S404) . The traveling control unit 12B executes the operation according to the additional guidance (S405). The operation according to the additional guidance is, for example, arbitration at the intersection as described above, temporary stop, and flashing of the flashers 24R and 24L. The traveling control unit 12B then determines whether the vehicle 10 has reached the traveling end position specified by the planned route information (S406). If the vehicle 10 has not reached the traveling end position specified by the waypoint, the processing of the control device 11 returns to S402. If the vehicle 10 has reached the traveling end position specified by the waypoint, the control device 11 ends the processing for traveling. When the vehicle 10 arrives at the traveling end position, the control device 11 transmits such information to the management device 70.

### [Anomaly Detection Unit]

The anomaly detection unit 12C monitors a control signal calculated by the traveling control unit 12B for controlling the vehicle 10. When the control signal exhibits an abnormality, such as steep change in the control signal, the anomaly detection unit 12C determines that the abnormality has occurred. In this case, the computing device 12 smooths the control signal calculated by the traveling control unit 12B or stops the output of the control signal.

### [Update of Point Cloud Map]

The storage device 72 stores a master point cloud map 72C (see FIG. 4). In the vehicle operation area B, a new object (e.g., building) may be provided. As such, the point cloud map stored in the storage device 13 of the vehicle 10 is preferably updated. The vehicle monitoring table 72A stored in the storage device 72 of the vehicle management device 70 may store a point cloud map stored in a storage device 13 of each vehicle 10. The information on the point cloud map may include, for example, the latest update time and the version name of the point cloud map stored in the storage device 13. In the processing of the vehicle monitoring unit 71D, such information may be received from the vehicle 10 at regular time intervals and recorded in the vehicle monitoring table.

As shown in FIG. 4, the computing device 71 of the vehicle management device 70 functionally includes a point cloud map management unit 71F. The point cloud map management unit 71F refers to information on the master point cloud map 72C (e.g., latest update time and/or version name) stored in the storage device 72 and information on the point cloud map of the respective vehicles 10 (e.g., latest update time and/or version name) recorded in the vehicle monitoring table 72A. When the point cloud map of the vehicle 10 does not match the master point cloud map, the point cloud map management unit 71F may transmit the master point cloud map (point cloud map) to the vehicle 10. At this time, the vehicle 10 may update the point cloud map stored in the storage device 13 with the newly received point cloud map.

The latest point cloud map may be transmitted to the vehicle 10 at a time or a location different from the time or the location at which the planned route information is transmitted to the vehicle 10. For example, the point cloud map may be transmitted to the vehicle 10 at a predetermined location and/or a predetermined time. As described above, upon receiving the forwarding command (planned route information from the current location to the forwarding location) from the forwarding managing unit 71B, the vehicle 10 returns to the forwarding location in the vehicle operation area B (e.g., garage or charging station). The point cloud map may be transmitted to the vehicle 10 when the vehicle 10 is in such a forwarding location. The forwarding command from the forwarding managing unit 71B (i.e., the return of the vehicle 10 to the forwarding location) may be made at a predetermined time. In this manner, the point cloud map is transmitted to the vehicle 10 at a predetermined time.

The point cloud map typically has a large amount of data. As such, the point cloud map may be transmitted to the vehicle 10 using communication means different from the communication means used when the planned route information is transmitted to the vehicle 10. The planned route information is transmitted to the vehicle 10 via the Internet and a mobile telephone network including a base station, for example. On the other hand, the point cloud map may be transmitted to the vehicle 10 via a wireless LAN or a wired LAN, for example, without going through the Internet and the mobile telephone network.

The transmission of the point cloud map to the vehicle 10 is not limited to the example described above. For example, similarly to the transmission of the planned route information, the point cloud map may be transmitted to the vehicle 10 via the Internet and the mobile telephone network.

### [Generation of Point Cloud Map]

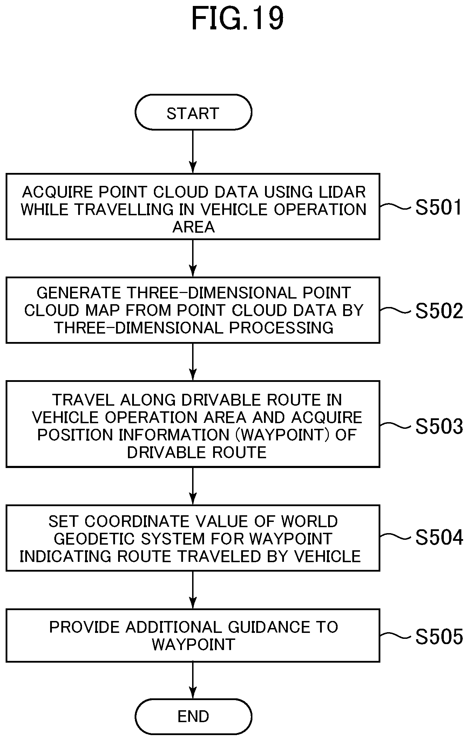

FIG. 19 is a flow chart showing an example of procedures for generating route basic information stored in the storage device 72 of the vehicle management device 70.

First, a three-dimensional point cloud map is generated. For generating the point cloud map, the vehicle acquires the point cloud data using the LiDAR while travelling in the vehicle operation area B (S501). This vehicle may be a vehicle other than the autonomous vehicle 10. While traveling, the vehicle acquires the point cloud data using the LiDAR and also acquires the position information through a GNSS receiver. The vehicle may have an inertial measurement unit (IMU) including an acceleration sensor and an angular velocity sensor. In this case, the position information may be acquired using the output of the IMU while the point cloud data is acquired by the LiDAR. The three-dimensional processing is executed on the point cloud data and the position information acquired in S501A, whereby three-dimensional point cloud map is generated for the entire vehicle operation area B (S502). The coordinate system (X, Y, Z) in the vehicle operation area B may be used as the coordinate system of the point cloud map. The point cloud map generated in this manner may be used as the master point cloud map described above.

Next, while acquiring the point group data using the LiDAR, the vehicle travels along the drivable route in the vehicle operation area B. The point group data acquired by the LiDAR is matched with the three-dimensional point group map generated in S502, and whereby the position information of the route on which the vehicle has traveled (i.e., the drivable route in the vehicle operation area B) is acquired (S503). This position information is coordinate values (X, Y, Z) of the waypoints represented by the coordinate system in the vehicle operation area B and included in the route basic information described referring to FIG. 6B. Subsequently, the coordinate values of the world geodetic system (latitude, longitude, altitude) are set for the waypoints indicating the route on which the vehicle has traveled (S504). The coordinate values of each waypoint in the world geodetic system can be calculated from the latitude and longitude of the origin of the coordinate system in the vehicle operation area B and the rotation angle of the coordinate system in the vehicle operation area B (the rotation angle is the inclination of the coordinate system in the vehicle operation area B in the world geodetic system).

Next, additional guidance is provided to each waypoint (S505). For example, in S503, when the vehicle travels so as to acquire the position information of the drivable route, a log of the driving operation of the vehicle may be recorded in association with the position information of the drivable route. The log includes information on the operations of the flashers 24R and 24L, vehicle speed, and temporary stop, for example. The generator of the route basic information may add additional guidance to each waypoint while referring to the log. This provides the route basic information shown in FIG. 6A.

### [Summary]

(1) As described above, a vehicle management device 70 includes a storage device 72 in which route basic information is stored in advance, where the route basic information includes waypoints arranged along a drivable route (FIG. 5A, L1, L2) previously defined in a vehicle operation area B, and a computing device 71 for generating planned route information indicating a route to be traveled by a vehicle 10 in response to a movement request to the vehicle. The computing device 71 extracts some of the waypoints (FIG. 6) included in the route basic information as the planned route information, where the some of the waypoints are arranged from a traveling start position to a traveling end position according to the movement request. This management device 70 enables to relatively easily generate the planned route.
(2) The vehicle management device 70 may further include a communication device 73 for transmitting the planned route information to the vehicle 10. This eliminates the need to perform route search in the vehicle 10, thereby reducing the computational load on the vehicle 10.
(3) The route basic information includes additional guidance in association with the waypoints included in the route basic information, where the additional guidance indicates a predetermined operation to be performed by the vehicle or a predetermined operation that the vehicle is allowed to perform. In this manner, the additional guidance included in the planned route can help control of the autonomous vehicle 10.
(4) The additional guidance may be information for guiding the vehicle to at least one of operations including a temporary stop of the vehicle, overtaking a vehicle travelling ahead, processing related to an arbitration with another vehicle at an intersection, and flashing of a flasher. In this manner, the additional guidance included in the planned route can help a temporary stop of the vehicle, overtaking a vehicle travelling ahead, processing related to an arbitration with another vehicle at an intersection, or flashing of a flasher.
(5) Each of the waypoints included in the route basic information may be associated with a coordinate value (X, Y, Z) in a coordinate system defined in the predetermined area and a coordinate value of a world geodetic system. This can specify the pick-up location and the drop-off location desired by the user by the coordinate values of the world geodetic system.
(6) The route basic information may include first basic information (FIG. 15A) and second basic information (FIG. 15B), where the first basic information defines a plurality of links indicating the drivable route and a plurality of nodes, which are ends of the plurality of links, and the second basic information associates the plurality of links with the waypoints arranged along the drivable route. The computing device 71 may search for a link from the traveling start position to the traveling end position using the first basic information and refer to the second basic information so as to acquire a waypoint corresponding to the link obtained by the search as the planned route information. This serves to reduce the computational load required for the route search.
(7) The route basic information may include first basic information and second basic information, where the first basic information indicates the drivable route previously defined in the predetermined area, and the second basic information associates a route specified by the first basic information with a waypoint. The computing device 71 may search for a route from the traveling start position to the traveling end position by using the first basic information and refer to the second basic information so as to acquire a waypoint corresponding to the route obtained by the search as the planned route information. By simplifying the first basic information, the computational load required for the route search can be reduced.
(8) The drivable route (FIG. 5A) defined in the vehicle operation area B has an annular shape. In this manner, the vehicle can reach the traveling end position by being moved in the traveling direction regardless of the positional relationship between the traveling start position and the traveling end position.
(9) The planned route may continue from the traveling start position according to the movement request to the traveling end position according to the movement request. The planned route may include a first partial route R1 (FIG. 16) and a second partial route R2 (FIG. 16) between the traveling start position and the traveling end position. The computing device 71 may divide the waypoints extracted as the planned route into the waypoints corresponding to the first partial route R1 and the waypoints corresponding to the second partial route R2.
(10) The planned route includes an intersection Cs (FIG. 16), the first partial route R1 includes one of two routes intersecting with each other at the intersection Cs, and the second partial route R2 includes the other of the two routes intersecting with each other at the intersection Cs. This helps the autonomous vehicle 10 to properly drive through the intersection.
(11) The autonomous driving system 1 includes the vehicle management device 70 and the vehicle 10. The vehicle 10 includes a driving mechanism 21, a steering mechanism 23, and a control device 11 that controls the driving mechanism 21 and the steering mechanism 23 so that the vehicle 10 travels along a planned route. The vehicle management device 70 may include a communication device 73 that transmits the planned route information to the vehicle 10. This eliminates the need to perform route search in the vehicle 10, thereby reducing the computational load on the vehicle 10.
(12) It may be determined whether the vehicle 10 is on the drivable route. The vehicle management device 70 does not transmit the planned route information to the vehicle 10 in a case where the vehicle 10 is not on the drivable route.
(13) The movement request to the vehicle 10 is a request for a movement from a current location of the vehicle 10 to a pick-up location desired by a user, a movement from the pick-up location desired by the user to a drop-off location desired by the user, and a movement from the current location of the vehicle to a forwarding location.
(14) The vehicle 10 includes an external sensor group 30 and a storage device, where the external sensor group 30 outputs surrounding information indicating a position of an object around the vehicle, and the storage device 13 stores map information indicating a position of an object in the vehicle operation area B. The control device 11 of the vehicle 10 includes a current location estimating unit 12A that matches the surrounding information with the map information so as to estimate a location of the vehicle 10. The map information is transmitted to the vehicle 10 at a timing different from the planned route information. This allows map information having a large amount of data to be safely transmitted to the vehicle 10.
(15) The vehicle 10 includes an external sensor group 30 and a storage device 13, where the external sensor group 30 outputs surrounding information indicating a position of an object around the vehicle 10, and the storage device 13 stores map information indicating a position of an object in the vehicle operation area B. The control device 11 of the vehicle 10 may include a current location estimating unit 12A that matches the surrounding information with the map information so as to estimate a location of the vehicle. The map information is transmitted to the vehicle using communication means different from communication means for receiving the planned route. This allows map information having a large amount of data to be safely transmitted to the vehicle.
(16) A travel route generating method proposed in this disclosure is a method for generating a planned route indicating a route to be traveled by a vehicle in a predetermined area B. The method includes the steps of acquiring a traveling start position and a traveling end position according to a movement request to the vehicle 10 and referring to route basic information that includes waypoints arranged along a predetermined drivable route (FIG. 5A) in the predetermined area B and is stored in a storage device 72 so as to extract some of the waypoints (FIG. 6) that are included in the route basic information as the planned route information, where the some of the waypoints are arranged from the traveling start position to the traveling end position. This method enables to relatively easily generate the planned route.

The travel route generating device proposed in the present disclosure is not limited to the vehicle management device 70 described above. The autonomous driving system proposed in the present disclosure is not limited to the autonomous driving system 1 described above. For example, the route basic information may not include additional guidance such as a temporary stop flag and a turn flag.

## Claims

1. A travel route generating device, comprising:
a storage device in which route basic information is stored in advance, the route basic information including waypoints arranged along a drivable route previously defined in a predetermined area; and
a computing device for generating planned route information indicating a route to be traveled by a vehicle in response to a movement request to the vehicle, wherein
the computing device extracts some of the waypoints included in the route basic information as the planned route information, the some of the waypoints being arranged from a traveling start position to a traveling end position according to the movement request.

2. The travel route generating device according to claim 1, further comprising a communication device for transmitting the planned route information to the vehicle.

3. The travel route generating device according to claim 1, wherein
the route basic information includes additional guidance in association with at least one of the waypoints included in the route basic information, the additional guidance indicating a predetermined operation to be performed by the vehicle or a predetermined operation that the vehicle is allowed to perform.

4. The travel route generating device according to claim 3, wherein
the additional guidance is information for guiding the vehicle to at least one of operations including a temporary stop of the vehicle, overtaking a vehicle travelling ahead, processing related to an arbitration with another vehicle at an intersection, and flashing of a flasher.

5. The travel route generating device according to claim 1, wherein
in the route basic information, each of the waypoints is associated with a coordinate value in a coordinate system defined in the predetermined area and a coordinate value of a world geodetic system.

6. The travel route generating device according to claim 1, wherein
the route basic information includes first basic information and second basic information, the first basic information defining a plurality of links indicating the drivable route and a plurality of nodes, which are ends of the plurality of links, the second basic information associating the plurality of links with the waypoints arranged along the drivable route, and
the computing device searches for a link from the traveling start position to the traveling end position using the first basic information and refers to the second basic information so as to acquire a waypoint corresponding to the link obtained by the search as the planned route information.

7. The travel route generating device according to claim 1, wherein
the route basic information includes first basic information and second basic information, the first basic information indicating the drivable route previously defined in the predetermined area, the second basic information associating a route specified by the first basic information with a waypoint, and
the computing device searches for a route from the traveling start position to the traveling end position by using the first basic information and refers to the second basic information so as to acquire a waypoint corresponding to the route obtained by the search as the planned route information.

8. The travel route generating device according to claim 1, wherein
the drivable route has an annular shape.

9. The travel route generating device according to claim 1, wherein
the route defined by the planned route information continues from the traveling start position according to the movement request to the traveling end position according to the movement request,
the route defined by the planned route information includes a first partial route and a second partial route between the traveling start position and the traveling end position, and
the computing device divides the waypoints extracted as the route defined by the planned route information into the waypoints corresponding to the first partial route and the waypoints corresponding to the second partial route.

10. The travel route generating device according to claim 9, wherein
the route defined by the planned route information includes an intersection,
the first partial route includes one of two routes intersecting with each other at the intersection, and
the second partial route includes the other of the two routes intersecting with each other at the intersection.

11. An autonomous driving system comprising:
the travel route generating device according to claim 1; and
the vehicle, wherein
the vehicle includes a driving mechanism, a steering mechanism, and a control device that controls the driving mechanism and the steering mechanism so that the vehicle travels along the route defined by the planned route information, and
the travel route generating device include a communication device that transmits the planned route information to the vehicle.

12. The autonomous driving system according to claim 11, wherein
it is determined whether the vehicle is on the drivable route, and
the travel route generating device does not transmit the planned route information to the vehicle in a case where the vehicle is not on the drivable route.

13. The autonomous driving system according to claim 11, wherein
the movement request to the vehicle is a request for at least one of a movement from a current location of the vehicle to a pick-up location desired by a user, a movement from the pick-up location desired by the user to a drop-off location desired by the user, or a movement from the current location of the vehicle to a forwarding location.

14. The autonomous driving system according to claim 11, wherein
the vehicle includes an external sensor and a storage device, the external sensor outputting surrounding information indicating a position of an object around the vehicle, the storage device storing map information indicating a position of an object in the predetermined area,
the control device of the vehicle includes a location estimating unit that matches the surrounding information with the map information so as to estimate a location of the vehicle, and
the map information is transmitted to the vehicle at a timing different from the planned route information.

15. The autonomous driving system according to claim 11, wherein
the vehicle includes an external sensor and a storage device, the external sensor outputting surrounding information indicating a position of an object around the vehicle, the storage device storing map information indicating a position of an object in the predetermined area,
the control device of the vehicle includes a location estimating unit that matches the surrounding information with the map information so as to estimate a location of the vehicle, and
the map information is transmitted to the vehicle using communication means different from communication means for receiving the planned route information.

16. A travel route generating method for generating a planned route indicating a route to be traveled by a vehicle in a predetermined area, the method comprising the steps of:
acquiring a traveling start position and a traveling end position according to a movement request to the vehicle;
referring to route basic information that includes waypoints arranged along a predetermined drivable route in the predetermined area and is stored in a storage device so as to extract some of the waypoints that are included in the route basic information as the planned route information, the some of the waypoints being arranged from the traveling start position to the traveling end position.
